# EUROPÄISCHE PATENTSCHRIFT

(11) **EP 0 673 556 B1**
(45) Veröffentlichungstag und Bekanntmachung des Hinweises auf die Patenterteilung: **12.06.1996**
(21) Anmeldenummer: 93901594.7
(22) Anmeldetag: 10.12.1992
(51) Int. Cl.: H02J 3/36, H02J 3/01

(54) **VERFAHREN UND VORRICHTUNG ZUR ERMITTLUNG VON ORDNUNGSZAHLEN VON NICHTCHARAKTERISTISCHEN OBERSCHWINGUNGSSTRÖMEN UND DEREN KOMPENSATION**
PROCESS AND DEVICE FOR DETERMINING THE ORDINAL NUMBERS OF NON-CHARACTERISTIC HARMONIC CURRENTS AND FOR COMPENSATING THE SAME
PROCEDE ET DISPOSITIF DE DETERMINATION DES NOMBRES ORDINAUX DE COURANTS D'HARMONIQUES NON CARACTERISTIQUES ET DE COMPENSATION DE CEUX-CI

(43) Veröffentlichungstag der Anmeldung: 27.09.1995
(73) Patentinhaber: SIEMENS AKTIENGESELLSCHAFT, D-80333 München (DE)
(72) Erfinder: CHRISTL, Norbert, D-8522 Herzogenaurach (DE); LÜTZELBERGER, Peter, D-8520 Erlangen (DE); SADEK, Kadry, D-8520 Erlangen (DE)
(86) Internationale Anmeldenummer: DE9201063
(87) Internationale Veröffentlichungsnummer: WO9414220

(56) Entgegenhaltungen:
- EP-A- 0 212 172
- ELEKTRIE Nr. 46, Maerz 1992, BERLIN Seiten 114 - 121 GRETSCH ET AL 'Einsatz eines Oberschwingungs-Mess-Geraetes an einer HGUE-Kurzkupplung'
- IEEE/CSEE JOINT CONFERENCE ON HIGH-VOLTAGE TRANSMISSION SYSTEMS IN CHINA 17. Oktober 1987, BEIJING, CHINA Seiten 148 - 153 CHRISTL ET AL 'double tuned harmonic ac-filters for hvdc-converter stations'
- ELEKTRIE Bd. 45, Maerz 1992, BERLIN Seiten 97 - 100 BAUER ET AL 'Harmonische in Drehstrom-Netzen bei Betrieb einer HGUE-Kurzkupplung'

## Beschreibung

Die Erfindung bezieht sich auf ein Verfahren und eine Vorrichtung zur Ermittlung von Ordnungszahlen von nichtcharakteristischen Oberschwingungsströmen eines mittels einer Hochspannungs-Gleichstrom-Übertragungs-Anlage mit einem ersten Energieversorgungsnetz gekoppelten zweiten Energieversorgungsnetzes und zur Kompensation dieser nichtcharakteristischen Oberschwingungsströme, die aufgrund einer im ersten Energieversorgungsnetz durch eine niederfrequente Harmonische vorhandenen und durch die Anlage hindurchtretenen Vorverzerrung der Speisespannung erzeugt wird.

Hochspannungs-Gleichstrom-Übertragungs-Kurzkupplungen werden benutzt, um elektrische Leistung zwischen Verbundnetzen auszutauschen, wodurch sich die Versorgungssicherheit in den einzelnen Verbundnetzen verbessert. Außerdem erlaubt eine Hochspannungs-Gleichstrom-Übertragungs-(HGÜ-)Kurzkupplung, auch Gleichstrom-Netzkupplung (GNK) genannt, wichtige und kostengünstige Stromgeschäfte im normalen Austausch und hat zumindest aufschiebende Wirkung auf den Zubau notwendiger zusätzlicher Kraftwerksleistung.

Aus der Zeitschrift "etz", Bd.110 (1989), Heft 14, Seiten 712 bis 714, ist der Kurzschaltplan der Gleichstrom-Netzkupplung Etzenricht bekannt. Diese Gleichstrom-Netzkupplung Etzenricht verbindet das westeuropäische Verbundnetz mit dem osteuropäischen Verbundnetz. Beide Netzverbände nutzen zwar dieselbe Nennfrequenz von 50 Hz, Frequenz und Spannung werden dabei in beiden Netzen nach unterschiedlichen Konzepten geregelt, so daß eine definierte Übertragungsleistung nur durch eine frequenzmäßige Entkopplung erreicht werden kann.

Im Aufsatz "HGÜ: Technik, die Grenzen überwindet" von R.Walz und J.Görke, abgedruckt in der Zeitschrift "Elektrie", Berlin 45 (1991) 3, Seiten 94 bis 96, sind Einzelheiten - Funktionsweise und Aufbau, Leittechnik, Steuerung, Regelung und Schutz- und Meldesystem - näher dargestellt. Die an den Sammelschienen der Netze angeordneten Drehstromfilterkreise haben die Aufgabe, die durch die Stromrichter entstehenden Oberschwingungen (charakteristische) abzusaugen und die benötigte kapazitive Blindleistung zur Kompensation der induktiven Stromrichter-Blindleistung zu erzeugen. Abhängig von der Blindleistungsbilanz im Netz und dem Arbeitspunkt der HGÜ werden die Filterkreise von der Steuerung zu- bzw. abgeschaltet.

Mit dem zunehmenden Begriff der Energiequalität wird in elektrischen Energieversorgungsnetzen vermehrt auf die Reduktion von Harmonischen geachtet, da durch Auftreten von Harmonischen die Elektroenergiequalität sich vermindert kann.

Aufgrund von Unsymmetrien der Betriebsmittelimpedanzen, der Netzspannung sowie der Unsymmetrie der Steuerwinkel der Gleich- und Wechselrichter der HGÜ-Anlage kommt es neben den charakteristischen Stromrichterharmonischen auch zum Auftreten nichtcharakteristischer Harmonischer.

Gemäß dem Aufsatz "Harmonische in Drehstromnetzen bei Betrieb einer HGÜ-Kupplung", von E.Bauer und G.Winkler, abgedruckt in der Zeitschrift "Elektrie", Berlin 45 (1991) 3, Seiten 97 bis 100, zeigt sich, daß die Amplituden der einzelnen nichtcharakteristischen Stromharmonischen wesentlich geringer als die der charakteristischen Stromharmonischen sind. Beim Projektieren von HGÜ-Anlagen ist besonders die Höhe der nichtcharakteristischen Harmonischen zu beachten, die unter der niedrigsten Abstimmfrequenz der Filter liegen, da die Filter für diese Harmonischen kapazitiv wirken und mit der Netzimpedanz einen Schwingkreis bilden. Hat dieser Schwingkreis eine Parallelresonanzstelle im Bereich der nichtcharakteristischen Harmonischen, so wird er von dieser angeregt und es können unerwartet hohe Spannungsharmonische im Netz auftreten. Im Falle der Anregung sollte gemäß diesem Aufsatz auch für diese niedrigsten Harmonischen ein Filter vorgesehen sein, der zweckmäßigerweise auf die tiefste, nichtcharakteristische - die dritte - Harmonische abgestimmt ist.

Neben den nichtcharakteristischen Harmonischen, die durch Unsymmetrien erzeugt werden, weist das Energieversorgungsnetz niederfrequente nichtcharakteristische Harmonische, wie z.B. 3., 5., 7., 9., usw., auf, die von industriellen Verbrauchern, z.B. Stromrichterantrieben, und Kleinverbrauchern, z.B. Fernsehgeraten, verursacht werden. Während die charakteristischen Spannungsharmonischen hauptsächlich von der HGÜ-Leistung abhängen, haben die nichtcharakteristischen Spannungsoberschwingungen einen ausgeprägten, von den Niederspannungsnetzen her bekannten Tagesgang. Die verbraucherbedingte Oberschwingungsemission ist während der Nachtzeit relativ gering, und der Pegel der beispielsweise 5. Oberschwingung erreicht lediglich 1 %. Während der Arbeitszeit bestimmen hauptsächlich industrielle Verbraucher den Pegel, der nun bis 1,5 % erreicht. Dagegen steigt der Pegel in den Abendstunden zur Fernsehzeit bis auf 2,3 % - und dies im Höchstspannungsnetz - an. Diese nichtcharakteristischen Oberschwingungen treten durch die HGÜ-Anlage von dem einen Netz in das andere Netz, wodurch sich die Elektroenergiequalität erheblich vermindern kann.

Der Erfindung liegt nun die Aufgabe zugrunde, ein Verfahren und eine Vorrichtung für eine eingangs genannte Anlage anzugeben, das bzw. die es gestattet, den Durchtritt sowie die Erzeugung von Stromoberschwingungen eines Umrichters, welcher durch im ersten Netz bereits vorhandene Harmonische oder Netzunsymmetrien verursacht werden, zu ermitteln und deren Kompensation im zweiten Netz.

Diese Aufgabe wird erfindungsgemäß gelöst durch die Merkmale des Anspruchs 1 und 5.

Die Erfindung beruht dabei auf der Erkenntnis, daß nichtcharakteristische Harmonische unterschiedlicher Ordnungszahl in das zweite Netz übertragen werden, je nachdem, ob die verursachende Vorverzerrung im ersten Energieversorgungsnetz als Mit- oder als Gegensystem auftritt. Es wurde herausgefunden, daß die nichtcharakteristischen Harmonischen im ersten Netz und die erzeugten nichtcharakteristischen Harmonischen im zweiten Energieversorgungsnetz einer gesetzmäßigen Regel unterliegen. Damit gegen die im zweiten Energieversorgungsnetz erzeugten nichtcharakteristischen Harmonischen etwas unternommen werden kann, müssen zunächst deren Ordnungszahlen ermittelt werden.

Mittels dem erfindungsgemäßen Verfahren besteht nun die Möglichkeit, mittels einer Spannungs- und/oder Strommessung im ersten Energieversorgungsnetz, die Ordnungszahlen der nichtcharakteristischen Harmonischen im zweiten Energieversorgungsnetz zu bestimmen. Dabei wird zunächst die Ordnungszahl der im ersten Netz vorhandenen niederfrequenten Harmonischen ermittelt, mit deren Hilfe und eines bereitgestellten Spannungssymmetrie-Signals die Ordnungszahl der untersten nichtcharakteristischen Harmonischen auf der Gleichstromseite des Umrichters bzw. einer HGÜ-Anlage bestimmt wird. Diese dem Gleichstrom überlagerte Harmonische erzeugt wiederum nichtcharakteristische harmonische Ströme auf der zweiten Drehstromseite des Umrichters, deren Ordnungszahlen in Abhängigkeit der Ordnungszahl der Harmonischen auf der Gleichstromseite des Umrichters und des Spannungssymmetrie-Signals bestimmt werden. Nachdem die Ordnungszahlen der aufgrund einer im ersten Energieversorgungsnetz vorhandenen niederfrequenten Harmonischen erzeugten nichtcharakteristischen Harmonischen im zweiten Energieversorgungsnetz bestimmt sind, kann in Abhängigkeit dieser Ordnungszahlen Teile einer Kompensationsanlage für nichtcharakteristische Harmonische aktiviert werden.

Somit besteht die Möglichkeit, erzeugte nichtcharakteristische Harmonische im zweiten Energieversorgungsnetz gezielt zu kompensieren, wodurch sich die Energiequalität des gekoppelten Netzes wesentlich verbessert, insbesondere bei nicht sehr starren Netzen.

Eine besonders vorteilhafte Vorrichtung zur Durchführung des erfindungsgemäßen Verfahrens besteht aus einer Mikroprozessoreinrichtung und einer Kompensationsanlage für nicht charakteristische Harmonische mit zugehöriger Filterlogik. Dadurch besteht die Möglichkeit, die Mikroprozessoreinrichtung in die Steuerung des Umrichters zu integrieren.

Zur weiteren Erläuterung der Erfindung wird auf die Zeichnung Bezug genommen, in der eine Ausführungsform der Vorrichtung zur Durchführung des erfindungsgemäßen Verfahrens schematisch veranschaulicht wird.
- Figur 1: zeigt einen Kurzschaltplan einer Ausführungsform der erfindungsgemäßen Vorrichtung in Verbindung mit einer HGÜ-Anlage und in
- Figur 2: ist ein Blockschaltbild einer Einrichtung zur Bestimmung der Ordnungszahlen nichtcharakteristischer Harmonischer auf der zweiten Drehstromseite des Umrichters dargestellt.

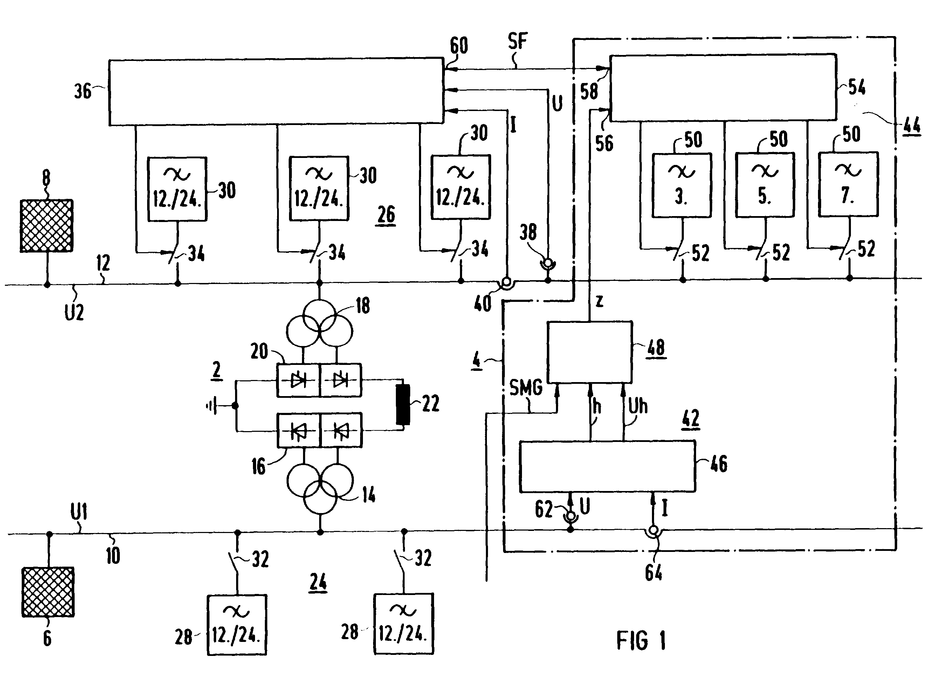

Die Figur 1 zeigt einen vereinfachten Schaltplan einer HGÜ-Anlage 2, auch HGÜ-Kurzkupplung oder Gleichstrom-Netzkupplung (GNK) genannt, mit einer Vorrichtung 4 zur Durchführung des erfindungsgemäßen Verfahrens. Diese HGÜ-Kurzkupplung 2 koppelt die beiden Energieversorgungsnetze 6 und 8. Jedes Netz 6 und 8 speist eine Sammelschiene 10 und 12 mit einer Netzspannung U1 und U2. Die Sammelschiene 10 ist über einen Stromrichtertransformator 14 mit einem Stromrichter 16 und die Sammelschiene 12 ist ebenfalls über einen Stromrichtertransformator 18 mit einem Stromrichter 20 verknüpft. Die beiden Stromrichter 16 und 20 sind mittels einer Glättungsdrossel 22 elektrisch leitend miteinander verbunden, wobei der Stromrichter 16 als Gleichrichter und der Stromrichter 20 als Wechselrichter betrieben wird. Die Sammelschiene 10 bzw. 12 weist noch eine Filteranlage 24 bzw. 26 auf, deren Filter 28 bzw. 30 mittels Schütze 32 bzw. 34 mit der Sammelschiene 10 bzw. 12 verbindbar sind. Bei der Filteranlage 26 ist noch deren Filterlogik 36 dargestellt, deren Eingänge mit einer Spannungs- und Strommeßeinrichtung 38 und 40 verknüpft sind, wobei deren Ausgänge jeweils mit einem Steuereingang der Schütze 34 verbunden sind.

Die Drehstromfilter 28 bzw. 30 saugen die Oberschwingungen, die durch die Stromrichter 16 und 20 entstehen, ab und erzeugen die nötige kapazitive Blindleistung zur Kompensation der induktiven Stromrichterblindleistung. Soweit keine erhöhten Anforderungen an den Oberschwingungsgehalt in dem jeweiligen Netz 6 bzw. 8 gestellt werden, werden die Drehstromfilter 28 bzw. 30 als doppelt abgestimmte Filter mit Hochpaßwiderstand ausgeführt. Abhängig von der Blindleistungsbilanz im Netz 6 bzw. 8 und dem Arbeitspunkt der HGÜ 2 werden die Filterkreise 28 und 30 zu- bzw. abgeschaltet. Diese Aufgabe wird von der Filterlogik 36 übernommen, deren Funktion im Aufsatz "Double Tuned Harmonic AC-Filters for HVDC-Converter Stations", abgedruckt in "IEEE/CSEE Joint Conference on High-Voltage Transmission Systems in China", Oct. 17.-22.,1987, BeiJing, Seiten 144 bis 153 beschrieben ist. Die Drehstromfilter 28 und 30 sind hier auf die 12. und 24. Harmonische (charakteristisch), die jeweiligen Mittelwerte der bei den tiefsten charakteristischen Harmonischen der Zwölfpuls-Brücke der beiden Stromrichter 16 und 20 abgestimmt.

Das allgemeine Funktionsprinzip einer HGÜ-Kurzkupplung 2 beruht darauf, daß bei zwei zu koppelnden Netzen 6 und 8 Strom bzw. Spannungen vom Netz 6 über den Stromrichtertransformator 14 auf die Gleichrichterstation 16 geführt und dort in Gleichspannung bzw. Gleichstrom umgewandelt werden. In der anderen Station 20, die als Wechselrichter betrieben wird, erfolgt die Umwandlung dieser Gleichgrößen zurück in Wechselspannung bzw. Wechselstrom. Über den Stromrichtertransformator werden diese Wechselgrößen dann an das Netz 8 geliefert. Um möglichst wenige Oberschwingungen zu erzeugen, sind die beiden Stromrichter 16 und 20 12-pulsig ausgeführt.

Im Gleichstromzwischenkreis befindet sich die Glättungsdrossel 22, die auf das Betriebsverhalten der HGÜ 2 einen wesentlichen Einfluß hat. Sie dient einerseits der Glättung des Gleichstromes sowie andererseits der Überstrombegrenzung im Falle von Störungen. Damit ist mit einer richtig dimensionierten Glattungsdrossel 22 auch eine bessere Entkopplung der beiden Netze 6 und 8 verbunden, weil durch die Drossel 22 im stationären Betrieb gegenseitig Netzbeeinflussungen weitgehend verhindert werden. Aus Übersichtlichkeitsgründen ist die Steuerung und Regelung der Anlage 2 nicht dargestellt, mit der die Anlage 2 jederzeit in einem sicheren und definierten Betriebszustand betrieben wird. Zur Realisierung der Steuerabläufe und der Steuerungsfunktionen werden speicherprogrammierbare Steuerungen eingesetzt. Die Regelung erzeugt alle notwendigen Aktionen zur Gewährleistung definierter Übertragungsverhältnisse im stationären Betrieb sowie der Energieübertragung bei dynamischen und transienten Betriebsbedingungen. Zum Einsatz kommt ein digitales Regelungssystem, wobei einzelne Regelungsfunktionen entsprechend ihrer Prioritäten und Informationsgewinnungen den verschiedenen Ebenen des hierarchisch aufgebauten Regelungssystems zugeordnet werden.

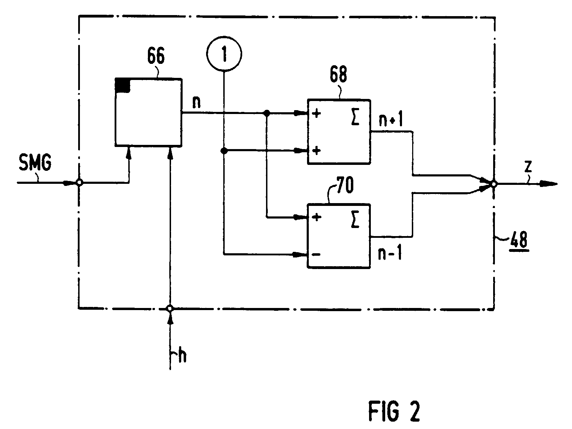

Die Vorrichtung 4 zur Durchführung des erfindungsgemäßen Verfahrens enthält einerseits eine Meß- und Recheneinrichtung 42 und andererseits eine Kompensationsanlage 44. Die Meß- und Recheneinrichtung 42 enthält eine Einrichtung 46 zur Bestimmung einer Ordnungszahl h einer Vorverzerrung Uh der Spannung U1 des speisenden Energieversorgungsnetzes 6 und eine Einrichtung 48 zur Bestimmung der Ordnungszahl z einer untersten nichtcharakteristischen Harmonischen, die aufgrund einer vorhandenen nichtcharakteristischen Harmonischen im Netz 6 im Energieversorgungsnetz 8 erzeugt wird. Diese Einrichtung 48 ist der Einrichtung 46 nachgeschaltet. Ein möglicher schematischer Aufbau der Einrichtung 48 ist in der Figur 2 näher dargestellt. Die Kompensationsanlage 44 besteht aus mehreren Drehstromfilterkreisen 50, die ausgangsseitig mittels Schütze 52 mit der Sammelschiene 12 des zweiten Energieversorgungsnetzes 8 verbindbar sind, und einer Filterlogik 54. Die Filter 50 sind hier auf die 3., 5. und 7. Harmonische (nicht-charakteristisch) abgestimmt. Es besteht auch die Möglichkeit Drehstromfilterkreise 50 für die 9. und 11. Harmonische hinzuzufügen. Außerdem können diese Filter 50 auch als doppelt abgestimmte Filter mit Hochpaßwiderstand ausgeführt sein, wodurch sich die Anzahl der Saugkreise und die Anzahl der Bauelemente (komplexe Bauweise) verringert. Ein erster Steuereingang 56 der Filterlogik 54 ist mit dem Ausgang der Einrichtung 48 zur Bestimmung der Ordnungszahl z nichtcharakteristische Harmonischer im Netz 8 und ein zweiter Steuereingang 58 ist mit einem Signalausgang 60 der Filterlogik 36 der Filteranlage 26 der HGÜ-Kurzkupplung 2 verbunden.

Die Vorrichtung 4 ist eingangsseitig mittels einer Spannungs- und/oder Strommeßeinrichtung 62 und 64 mit der Sammelschiene 10 des ersten Energieversorgungsnetzes 6 verknüpft. Außerdem wird von einer nicht näher dargestellten Steuerung und Regelung der HGÜ 2 ein Spannungssymmetrie-Signal SMG der Einrichtung 48 zur Bestimmung der Ordnungszahl z der nichtcharakteristischen Harmonischen des Netzes 8, die aufgrund vorhandener nichtcharakteristischer Harmonischer des Netzes 6 erzeugt werden, bereitgestellt.

Im folgenden soll nun das erfindungsgemäße Verfahren näher erläutert werden:

Durch industrielle Verbraucher, z.B. Stromrichterantriebe und Fernsehgeräte, weist das Energieversorgungsnetz Anteile niederfrequenter Harmonischer wie z.B. 3., 5., 7. und 9., auf. Diese Spannungsoberschwingungen Uh, auch Vorverzerrungen Uh der Spannung U1 genannt, haben einen ausgeprägten, von den Niederspannungsnetzen her bekannten Tagesgang. Insbesondere die Summe der Fernsehempfänger-Netzteile verursachen einen höheren Oberschwingungspegel als die Gesamtheit der industriellen Verbraucher. Diese niederfrequenten Harmonischen sind für eine 12-pulsige HGÜ-Kurzkupplung 2 nichtcharakteristische Harmonische, die durch die HGÜ-Kurzkupplung 2 hindurchtreten. D.h., diese nichtcharakteristischen Oberschwingungen Uh erzeugen wiederum durch Modulation nichtcharakteristische Harmonische im zweiten Energieversorgungsnetz 8. Dem erfindungsgemäßen Verfahren liegt nun die Erkenntnis zugrunde, daß die Ordnungszahl z der im zweiten Netz 8 bewirkten nichtcharakteristischen Harmonischen verschieden sind, je nachdem, wie die verursachende Vorverzerrung Uh im ersten Netz 6 als Mit- oder als Gegen-System auftritt.

Tritt beispielsweise eine Vorverzerrung Uh durch eine Harmonische mit der Ordnungszahl h=5 im Mit-System des ersten Energieversorgungsnetzes 6 auf, so findet man als unterste, nichtcharakteristische Oberschwingung auf der Gleichstromseite der HGÜ-Kurzkupplung 2 die höhere Nachbar-Harmonische mit der Ordnungszahl n=h+1=6. Tritt dagegen diese Vorverzerrung Uh im Gegen-System des ersten Energieversorgungsnetzes 6 auf, so findet man auf der Gleichstromseite als unterste Oberschwingung die niedere Nachbar-Harmonische mit der Ordnungszahl n=h-1=4. Die durch die Netzvorverzerrung Uh erzeugte Harmonische Spannung Unh im Gleichstromkreis, wird einen zusätzlichen harmonischen Stromanteil Idh verursachen, deren Amplitude von der harmonischen Spannung Unh, der Induktivität L der Drossel 22, der Ordnungszahl n der nichtcharakteristischen Harmonischen auf der Gleichstromseite und der Frequenz ω abhängt. Diese, dem Gleichstrom überlagerte Harmonische erzeugt wiederum nichtcharakteristische harmonische Ströme Ih auf der zweiten Drehstromseite der HGÜ-Kurzkupplung 2 mit der Ordnungszahl z=n+/-1. D.h., eine nichtcharakteristische Harmonische mit der Ordnungszahl h=5 im ersten Energieversorgungsnetz 6 erzeugt auf der zweiten Netzseite nichtcharakteristische Harmonische der Ordnungszahlen z=5 und z=7.

Würde man diese nichtcharakteristischen Harmonischen nicht mittels Drehstromfilterkreise 50 absaugen, so würde diese unter der niedrigsten Abstimmfrequenz der Filter 30 der HGÜ 2 liegende nichtcharakteristischen Harmonischen, da die Filter 30 für diese Harmonischen kapazitiv wirken, mit der Netzimpedanz einen Schwingkreis bilden. Hat dieser Schwingkreis eine Parallelresonanzstelle im Bereich dieser nichtcharakteristischer Harmonischen, so wird er von diesen angeregt und es können unerwartet hohe Spannungsharmonische im Netz 8 auftreten. Diese Spannungsharmonischen würden die Energiequalitat des Netzes 8 erheblich reduzieren.

Gemäß dem erfindungsgemäßen Verfahren wird zunächst die Ordnungszahl und ggf. auch die Amplitude der Vorverzerrung Uh der Spannung U1 des Netzes 6 mittels der Einrichtung 46 bestimmt. Als Einrichtung 46 kann ein bekanntes Oberschwingungs-Meßgerät ("Elektrie",Berlin 46 (1992) 3, Seiten 114 bis 121) verwendet werden. Die nachfolgende Einrichtung 48 ermittelt zunächst in Abhängigkeit der ermittelten Ordnungszahl h und eines bereitgestellten Spannungssymmetrie-Signals SMG die Ordnungszahl n der nichtcharakteristischen Harmonischen auf der Gleichstromseite der HGÜ 2. Dann ermittelt die Einrichtung 48 die Ordnungszahl z der nichtcharakteristischen Harmonischen auf der zweiten Drehstromseite der HGÜ 2. Entsprechend dieser ermittelten Ordnungszahlen z=n+/-1 erzeugt die Filterlogik 54 Steuersignale für die Schütze 52, so daß entsprechend der Ordnunszahlen z Drehstromfilterkreise an das Netz 8 geschaltet werden, die die Oberschwingungsströme Ih mit den Ordnungszahlen z absaugen. Da die Filter 50 jeweils auf eine geringe Blindleistung ausgelegt sind, ist eine Vorsichtsmaßnahme installiert. Dabei wird von der Filterlogik 36 der Filteranlage 26 ein Freigabesignal SF generiert, sobald eines seiner Filter 30 an das Netz 8 geschaltet wird.

In der Figur 2 ist beispielsweise eine Ausführungsform der Einrichtung 48 zur Bestimmung der Ordnungzahl z der nichtcharakteristischen Harmonischen im Netz 8 dargestellt. Diese Einrichtung 48 weist eingangsseitig einen Speicher 66 auf, der ausgangsseitig jeweils mit einem Plus-Eingang eines Addierers 68 und 70 verbunden ist. Eingangsseitig wird dem Speicher 66 die Ordnungszahl h der nichtcharakteristischen Harmonischen des Netzes 6 und das Spannungssymmetrie-Signal SMG zugeführt. Das Spannungssymmetrie-Signal SMG gibt an, ob die Vorverzerrung Uh der Spannung U1 des Netzes 6 im Mit- oder Gegen-System auftritt. Für jedes Spannungssystem ist im Speicher 66 eine Tabelle harmonischer Spannungen mit den Ordnungszahlen n und die zugehörigen Amplituden abgespeichert. Nachdem mittels des Spannungssymmetrie-Signals SMG eine Tabelle ausgewählt wurde, wird mittels der Ordnungszahl h die zugehörige Ordnungszahl n der nichtcharakteristischen Harmonischen auf der Gleichstromseite der HGÜ 2 ausgelesen und jeweils dem Plus-Eingang der Addierer 68 und 70 zugeführt. Am zweiten Eingang des Addierers 68 (Plus-Eingang) und des Addierers 70 (Minus-Eingang) steht die Konstante "1" an. An den Ausgängen der Addierer 68 und 70 steht jeweils eine Ordnungszahl z=n+1 und z=n-1 der nichtcharakteristischen Harmonischen des Netzes 8 an, die aufgrund einer nichtcharakteristischen Harmonischen im Netz 6 erzeugt sind.

Eine nichtcharakteristischen Harmonische mit Ordnungszahlen h=5 im Mit-System des ersten Netzes 6 generiert im zweiten Netz 8 nichtcharakteristische Harmonische der Ordnungszahlen z=5 und z=7. Eine nichtcharakteristische Harmonische mit der Ordnungszahl h=5 im Gegen-System des ersten Netzes 6 generiert im zweiten Netz 8 nichtcharakteristische Harmonische der Ordnungszahlen z=3 und z=5.

Mittels des erfindungsgemäßen Verfahrens besteht die Möglichkeit, jeweils jede nichtcharakteristische Harmonische im ersten Netz 6 nach Ordnungszahl h und Amplitude der Vorverzerrung Uh zu ermitteln und die Ordnungszahlen z der generierten nichtcharakteristischen Harmonischen im zweiten Netz 8 bestimmen, so daß entsprechend dieser Ordnungszahlen z entsprechende Drehstromfilterkreise 50 ans zweite Netz geschaltet werden können, die die Oberschwingungsströme Ih absaugen. Dadurch wird die Energiequalitat des zweiten Netzes 8 verbessert. Dieses Verfahren und diese Vorrichtung können besonders bei nicht starren Netzen deren Energiequalität erheblich verbessern.

## Patentansprüche

1. Verfahren zur Ermittlung von Ordnungszahlen (z) von nichtcharakteristischen Oberschwingungsströmen (Ih) eines mittels einer Hochspannungs-Gleichstrom-Übertragungs-Anlage (2) mit einem ersten Energieversorgungsnetz (6) gekoppelten zweiten Energieversorgungsnetzes (8) und zur Kompensation dieser nichtcharakteristischen Oberschwingungsströme (Ih), die aufgrund einer im ersten Energieversorgungsnetz (6) durch eine niederfrequente Harmonische vorhandenen und durch die Kurzkupplung (2) hindurchtretenden Verzerrung (Uh) der Speisespannung (U1) erzeugt wird, mit folgenden Verfahrensschritten:
a) Ermittlung der Ordnungzahl (h) einer Vorverzerrung (Uh) der Spannung (U1) des speisenden Energieversorgungsnetzes (6) aufgrund einer Spannungs- und/oder Strommessung;
b) Ermittlung der Ordnungszahl (n) einer untersten nichtcharakteristischen Oberschwingung auf der Gleichstromseite der Anlage (2) in Abhängigkeit der ermittelten Ordnungszahl (h) und eines bereitgetellten Spannungssymmetrie-Signals (SMG);
c) Ermittlung der Ordnungszahl (z) einer untersten nichtcharakteristischen Oberschwingung auf der zweiten Drehstromseite der Anlage (2) in Abhängigkeit der ermittelten Ordnungszahl (n) der nichtcharakteristischen Oberschwingung auf der Gleichstromseite der Kurzkupplung (2) und des bereitgestellten Spannungssymmetrie-Signals (SMG) und
d) Aktivierung wenigstens eines Teils einer Kompensationsanlage (44) aufgrund der ermittelten Ordnungszahlen (z) von nichtcharakteristischen Oberschwingungsströmen (Ih) im zweiten Energieversorgungsnetz (8).

2. Verfahren nach Anspruch 1, wobei der Kompensationsanlage (44) für die nichtcharakteristischen Oberschwingungsströme (Ih) ein Freigabesignal (SF) zugeführt wird.

3. Verfahren nach Anspruch 1, wobei die Ordnungszahl (n) einer untersten nichtcharakteristischen Oberschwingung auf der Gleichstromseite der Anlage mittels n = h+1, wenn die verursachende Netzverzerrung (Uh) im Mit-System, bzw. mittels n = h-1, wenn die verursachende Netzverzerrung (Uh) im Gegen-System auftritt, berechnet wird, mit h = Ordnungszahl einer Netzverzerrung (Uh).

4. Verfahren nach Anspruch 1, wobei die Ordnungszahl (z) einer untersten nichtcharakteristischen Oberschwingung auf der zweiten Drehstromseite der Anlage (2) mittels z = n+1 berechnet wird, mit n = Ordnungszahl einer nichtcharakteristischen Oberschwingung auf der Gleichstromseite der Kurzkupplung (2).

5. Vorrichtung (4) zur Durchführung des Verfahrens nach Anspruch 1 für zwei durch eine Hochspannungs-Gleichstrom-Übertragungs-Anlage bzw. Kurzkupplung (2) miteinander verbundenen Energieversorgungsnetzen (6,8), wobei eines der Netze Energie in das andere Netz speist und das speisende Energieversorgungsnetz (6) eine Vorverzerrung (Uh) der Spannung (U1) durch eine niederfrequente Harmonische aufweist, die durch die Kurzkupplung (2) tritt, bestehend aus einer Einrichtung (46) zur Bestimmung einer Ordnungszahl (h) einer Vorverzerrung (Uh) der Spannung (U1) des speisenden Energieversorgungsnetzes (6), der eingangsseitig ein Spannungs- und/oder Strommeßwert (62, 64) zugeführt ist, einer Einrichtung (48) zur Bestimmung der Ordnungszahl (z) einer untersten nichtcharakteristischen Oberschwingung auf der zweiten Drehstromseite der Anlage (2) in Abhängigkeit des ermittelten Betrags und der ermittelten Ordnungszahl (h) der Vorverzerrung (Uh), eines Spannungssymmetrie-Signals (SMG) und einer zwischendurch bestimmten Ordnungszahl (n) einer untersten nichtcharakteristischen Oberschwingung auf der Gleichstromseite der Anlage (2), wobei diese Einrichtung (48) der Einrichtung (46) zur Bestimmung der Vorverzerrung (Uh) nachgeschaltet ist, und einer Kompensationsanlage (44) für die nichtcharakteristischen Oberschwingungsströme (Ih) im zweiten Energieversorgungsnetz (8), deren Steuereingang (56) mit dem Ausgang der Einrichtung (48) zur Bestimmung der Ordnungszahl (z) einer untersten nichtcharakteristischen Oberschwingung verbunden ist, wobei die Ausgänge dieser Kompensationsanlage (44) mit dem zweiten Energieversorgungsnetz (8) verbindbar sind.

6. Vorrichtung (4) nach Anspruch 5, wobei einem zweiten Steuereingang (58) der Kompensationsanlage (44) für die nichtcharakteristischen Oberschwingungsströme (Ih) ein Freigabesignal (SF) von einer Filterlogik (36) der HGÜ-Anlage (2) zugeführt ist.

7. Vorrichtung (4) nach Anspruch 5, wobei als Einrichtung (46) zur Bestimmung der Vorverzerrung (Uh) nach Betrag und Ordnungszahl (h) ein Oberschwingungsmeßgerät vorgesehen ist.

8. Vorrichtung (4) nach Anspruch 5, wobei als Einrichtung (48) zur Bestimmung der Ordnungszahl (z) einer nichtcharakteristischen Oberschwingung ein Speicher (66) mit nachgeschalteter Logik (68,70) vorgesehen ist.

9. Vorrichtung (4) nach Anspruch 5, wobei die Kompensationsanlage (44) für die nichtcharaketristischen Oberschwingungsströme (Ih) mehrere Filter (50) unterschiedliche niederfrequente Ordnungszahlen (z) aufweist.

## Claims

1. Method for determining the ordinal numbers (z) of non-characteristic harmonic currents (Ih) of a second power supply network (8), which is coupled by means of a high-voltage direct-current transmission system (2) to a first power supply network (6), and for compensating these non-characteristic harmonic currents (Ih), which is (sic) produced because of a distortion (Uh) of the supply voltage (U1), which distortion (Uh) is present in the first power supply network (6) as a result of a low-frequency harmonic and passes through the back-to-back link (2), having the following method steps:
a) determination of the ordinal number (h) of a pre-distortion (Uh) of the voltage (U1) of the supplying power supply network (6) on the basis of a voltage measurement and/or current measurement;
b) determination of the ordinal number (n) of a lowest non-characteristic harmonic on the direct-current side of the system (2) as a function of the ordinal number (h) which is determined and of a voltage-symmetry signal (SMG) which is made available;
c) determination of the ordinal number (z) of a lowest non-characteristic harmonic on the second three-phase side of the system (2) as a function of the ordinal number (n) determined of the non-characteristic harmonic on the direct-current side of the back-to-back link (2) and of the voltage-symmetry signal (SMG) which is made available; and
d) activation of at least one portion of a compensation system (44) on the basis of the ordinal numbers (z) determined of non-characteristic harmonic currents (Ih) in the second power supply network (8).

2. Method according to claim 1, wherein an enable signal (SF) is supplied to the compensation system (44) for the non-characteristic harmonic currents (Ih).

3. Method according to claim 1, wherein the ordinal number (n) of a lowest non-characteristic harmonic on the direct-current side of the system is calculated by means of n = h+1 when the effecting network distortion (Uh) occurs in the positive-sequence system, and by means of n = h-1 when the effecting network distortion (Uh) occurs in the negative-sequence system, with h = the ordinal number of a network distortion (Uh).

4. Method according to claim 1, wherein the ordinal number (z) of a lowest non-characteristic harmonic on the second three-phase side of the system (2) is calculated by means of z = n+1, with n = the ordinal number of a non-characteristic harmonic on the direct-current side of the back-to-back link (2).

5. Device (4) for carrying out the method according to claim 1 for two power supply networks (6, 8) which are connected to each other by a high-voltage direct-current transmission system or back-to-back link (2), with one of the networks supplying power into the other network and the supplying power supply network (6) having a pre-distortion (Uh) of the voltage (U1) by a low-frequency harmonic, which pre-distortion passes through the back-to-back link (2), said device comprising an apparatus (46) for determining an ordinal number (h) of a pre-distortion (Uh) of the voltage (U1) of the supplying power supply network (6), to the input side of which apparatus (46) a voltage measured value and/or current measured value (62, 64) is supplied, an apparatus (48) for determining the ordinal number (z) of a lowest non-characteristic harmonic on the second three-phase side of the system (2) as a function of the amount determined and of the ordinal number (h) determined of the pre-distortion (Uh), of a voltage-symmetry signal (SMG) and of an ordinal number (n), which is determined in the meantime, of a lowest non-characteristic harmonic on the direct-current side of the system (2), with this apparatus (48) being subsequently connected to the apparatus (46) for determining the pre-distortion (Uh), and a compensation system (44) for the non-characteristic harmonic currents (Ih) in the second power supply network (8), the control input (56) of which compensation system (44) is connected to the output of the apparatus (48) for determining the ordinal number (z) of a lowest non-characteristic harmonic, with it being possible to connect the outputs of this compensation system (44) to the second power supply network (8).

6. Device (4) according to claim 5, with an enable signal (SF) being supplied from filter logic (36) of the HVDCT system (2) to a second control input (58) of the compensation system (44) for the non-characteristic harmonic currents (Ih).

7. Device (4) according to claim 5, with a harmonic measuring unit being provided as the apparatus (46) for determining the pre-distortion (Uh) in terms of amount and ordinal number (h).

8. Device (4) according to claim 5, with a memory (66), which has subsequently connected logic (68, 70), being provided as the apparatus (48) for determining the ordinal number (z) of a non-characteristic harmonic.

9. Device (4) according to claim 5, with the compensation system (44) for the non-characteristic harmonic currents (Ih) having a plurality of filters (50) for different low-frequency ordinal numbers (z).

## Revendications

1. Procédé de détermination de rangs (z) de courants (Ih) d'harmoniques non caractéristiques d'un deuxième réseau (8) d'alimentation en énergie couplé au moyen d'une installation (2) de transmission de courant continu haute tension à un premier réseau (6) d'alimentation en énergie et de compensation de ces courants (Ih) d'harmoniques non caractéristiques, que l'on produit du fait d'une distorsion (Uh) de la tension (U1) d'alimentation, existant du fait d'un harmonique basse fréquence et traversant le couplage (2) court, comportant les étapes opératoires suivantes :
a) détermination du rang (h) d'une distorsion préalable (Uh) de la tension (U1) du réseau (6) d'alimentation en énergie débiteur par mesure d'une tension et/ou d'un courant;
b) détermination du rang (n) d'un harmonique le plus bas non caractéristique du côté courant continu de l'installation (2) en fonction du rang (h) déterminé et d'un signal (SMG) de symétrie de tension tenu prêt;
c) détermination du rang (z) d'un harmonique le plus bas non caractéristique du second côté triphasé de l'installation (2) en fonction du rang (n) déterminé de l'harmonique non caractéristique du côté courant continu du couplage (2) court et du signal (SMG) de symétrie de tension tenu prêt, et
d) activation d'au moins une partie d'une installation (44) de compensation sur la base des rangs (z) déterminés de courants (Ih) d'harmoniques non caractéristiques dans le second réseau (8) d'alimentation en énergie.

2. Procédé suivant la revendication 1, dans lequel on envoie à l'installation (44) de compensation des courants (Ih) d'harmoniques non caractéristiques, un signal (SF) de libération.

3. Procédé suivant la revendication 1, dans lequel on calcule le rang (n) d'un harmonique non caractéristique le plus bas du côté courant continu de l'installation par n = h+1, lorsque la distorsion (Uh) du réseau effective apparaît dans le système direct ou par n = h-1, lorsque la distorsion (Uh) de réseau effective apparaît dans le système inverse, où h est le rang d'une distorsion (Uh) du réseau.

4. Procédé suivant la revendication 1, dans lequel on calcule le rang (z) d'un harmonique non caractéristique le plus bas du second côté triphasé de l'installation (2) par z = n+1, où n est le rang d'un harmonique non caractéristique du côté courant continu du couplage (2) court.

5. Dispositif (4) pour la mise en oeuvre du procédé suivant la revendication 1 pour deux réseaux (6, 8) d'alimentation en énergie reliés l'un à l'autre par une installation ou couplage court (2) de transmission de courant continu haute tension, l'un des réseaux fournissant de l'énergie à l'autre réseau et le réseau (6) d'alimentation en énergie débiteur comportant une distorsion (Uh) préalable de la tension (U1) du fait d'un harmonique de basse fréquence, qui apparaît du fait du couplage (2) court, le dispositif (4) étant constitué d'un dispositif (46) de détermination d'un rang (h) d'une distorsion (Uh) préalable de la tension (U1) du réseau (6) d'alimentation en énergie débiteur, et une valeur (62,64) de mesure de la tension et/ou du courant étant envoyée en entrée à ce dispositif (46), d'un dispositif (48) de détermination du rang (z) d'un harmonique le plus bas non caractéristique du second côté triphasé de l'installation (2) en fonction du module déterminé et du rang (h) déterminé de la distorsion (Uh) préalable, en fonction d'un signal (SMG) à symétrie de tension et en fonction d'un rang (n), déterminé entre-temps, d'un harmonique le plus bas non caractéristique du côté courant continu de l'installation (2), ce dispositif (48) étant branché en aval du dispositif (46) de détermination de la distorsion préalable (Uh), le dispositif (4) étant constitué en outre d'une installation (44) de compensation des courants (Ih) d'harmoniques non caractéristiques dans le second réseau (8) d'alimentation en énergie, une entrée (56) de commande de cette installation (44) de compensation étant reliée à la sortie du dispositif (48) de détermination du rang (z) d'un harmonique le plus bas non caractéristique, les sorties de cette installation (44) de compensation pouvant être reliées au second réseau (8) d'alimentation en énergie.

6. Dispositif (4) suivant la revendication 5, dans lequel un signal (SF) de libération peut être envoyé par un circuit logique (36) de filtrage de l'installation (2) de transmission de courant continu haute tension à une seconde entrée (58) de commande de l'installation (44) de compensation des courants (Ih) non caractéristiques.

7. Dispositif (4) suivant la revendication 5, dans lequel il est prévu, comme dispositif (46) de détermination de la distorsion (Uh) préalable en module et en rang (h), un appareil de mesure d'harmoniques.

8. Dispositif (4) suivant la revendication 5, dans lequel il est prévu, comme dispositif (48) de détermination du rang (z) d'un harmonique non caractéristique, une mémoire (66), en aval de laquelle un circuit logique (68, 70) est branché.

9. Dispositif (4) suivant la revendication 5, dans lequel l'installation (44) de compensation des courants (Ih) d'harmoniques non caractéristiques comporte plusieurs filtres (50) de rangs (z) basse fréquence différents.
